Europäisches Patentamt

European Patent Office

Office européen des brevets

(11) Veröffentlichungsnummer: **0 116 031**
A2

## (12) EUROPÄISCHE PATENTANMELDUNG

(21) Anmeldenummer: **84890026.2**

(22) Anmeldetag: **02.02.84**

(51) Int. Cl.³: **B 60 R 21/10**

(30) Priorität: **03.02.83 AT 373/83**

(43) Veröffentlichungstag der Anmeldung: **15.08.84**
**Patentblatt 84/33**

(84) Benannte Vertragsstaaten: **CH DE FR GB LI SE**

(71) Anmelder: **Hoffelner, Volkwin, Hötzendorfergasse 10A, A-3423 St. Andrä-Wördern (AT)**

(72) Erfinder: **Hoffelner, Volkwin, Hötzendorfergasse 10A, A-3423 St. Andrä-Wördern (AT)**

(74) Vertreter: **Köhler-Pavlik, Johann, Dipl.-Ing., Margaretenplatz 5, A-1050 Wien (AT)**

(54) Einrichtung zum Durchschneiden von Autogurten.

(57) Einrichtung zum Durchschneiden von Autogurten, bei welcher ein an der Autotüre (1) befestigbarer Halter (5) sowie ein in diesen lösbar gehaltenes Messer (12) vorgesehen ist. Das Messer (12) besteht aus einem als längliches Plättchen ausgebildeten Griff (20) und einer in diesem eingebetteten Schneide oder Klinge (21), die mit ihrer Schneidfläche in einen sich im wesentlichen diagonal erstreckenden Schlitz (18) des Griffes (20) ragt, welcher mit einem erweiterten Ende an der einen Seite des Griffes (20) ausläuft und im übrigen Teil mit parallel zueinander durchgehend verlaufenden Wänden versehen ist.

## Einrichtung zum Durchschneiden von Autogurten

Die Erfindung betrifft eine Einrichtung zum Durchschneiden von Autogurten mit einem Messer. Derartige Maßnahmen sind häufig bei Unfällen erforderlich, bei denen sich der Fahrer oder der Mitfahrer durch Betätigung der herkömmlichen Auslösevorrichtung vom Autogurt nicht befreien kann.

Erfindungsgemäß ist am unteren Rand der Fensteröffnung der Autotüre ein Halter angeordnet, in dem das Messer durch Einschieben so gehalten ist, daß es oberhalb der inneren Oberkante des unteren Randes der Fensteröffnung liegt, und daß das Messer aus einer Griffplatte und einer innerhalb eines vom Rand der Griffplatte ausgehenden Schlitzes griffgeschützt angeordneten Klinge besteht.

Weitere Einzelteile der Erfindung werden anhand der Zeichnung näher erläutert, in welcher eine Ausführungsform des Erfindungsgegenstandes dargestellt ist. Es zeigen

Fig. 1 einen Querschnitt einer Autotüre mit der eingesetzten
        Einrichtung,
Fig. 2 eine Seitenansicht der Klammer mit eingesetztem Gurttrennmesser und
Fig. 3 eine Draufsicht des Messers.

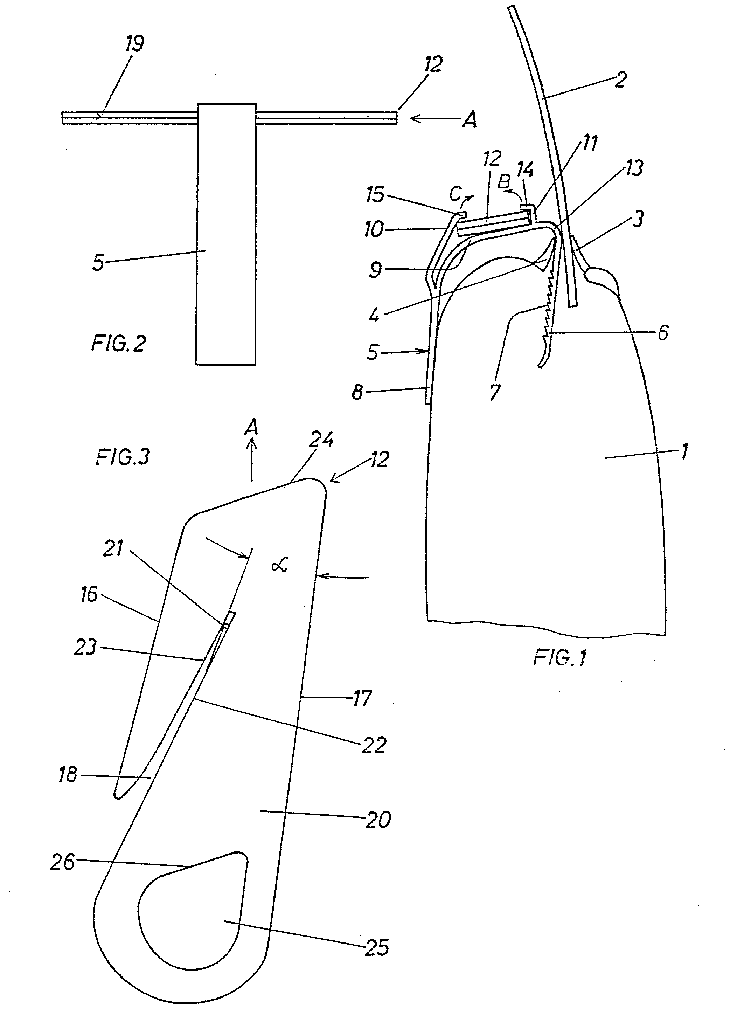

In Fig. 1 bezeichnet 1 die Autotüre, in welcher ein Fenster 2
gelagert ist, das in an sich bekannter Weise durch eine nicht dargestellte Einrichtung, die keinen Gegenstand der Erfindung bildet,
verstellbar ist. Eine äußere und eine innere Fensterdichtung 3 bzw.
4 verhindert, daß Regenwasser von der Außenseite des Fensters oder
Dunstniederschlag von der Innenseite des Fensters in das Innere
der Autotüre gelangen kann. Ein Halter 5 der im wesentlichen U-förmigen Querschnitt aufweist und vorzugsweise aus Kunststoff besteht,
ist mit seinem einen Schenkel 6 zwischen Dichtung 4 und Fenster 2
in die Autotüre eingesetzt und besitzt an der dem Fenster abgekehrten Innenseite dieses Schenkels 6 eine Verzahnung 7, welche vorzugsweise als Sägeverzahnung ausgebildet ist, in der Weise, daß die
Zähne nach oben gerichtet sind und verhindern, daß die Klammer beim
Hochkurbeln des Fensters mitgenommen wird. Ein äußerer Schenkel 8
stützt sich an der Innenseite der Autotüre ab. Der Halter besitzt
im Bereich seines Steges 9 zwei in Abstand voneinander angeordnete
Lappen 10,11 zwischen denen das Gurttrennmesser 12 gehalten ist.

Der Steg 9 des Halters 5 ist in der Gebrauchsstellung schräg nach
unten gegen den Fahrzeuginnenraum gerichtet, sodaß er die Sicht
des Fahrers nach der Seite hin nicht behindert und auch das Aussehen der Türe in keiner Weise beeinträchtigt, bei einem Unfall jedoch von einer Rettungsperson die an das Fenster herangetreten ist,
sofort gesehen wird. Zu diesem Steg 9 verläuft der Schenkel 6,
welcher an der Innenseite die Zahnung 7 trägt, ebenfalls schräg
nach unten zur Innenseite der Autotüre 1, während sich der Schenkel 8 des Halters 5 direkt an der Innenseite der Tür 1 abstützt.

Der dem Fenster 2 näher gelegene Lappen 11 befindet sich im Anschluß an eine fensterseitige Rundung 13, welche einen Übergang
des Steges 9 des Halters 5 in deren Schenkel 6 bildet. Die Höhe
des Lappens entspricht im wesentlichen der Dicke des Gurttrennmessers 12 und besitzt ein zum Lappen 10 hin schnabelartig abgebogenes Ende 14, sodaß sich der Lappen 11 an den Seitenrand des
Gurttrennmessers anlegt und ihn leicht übergreift. Der gegenüberliegende Lappen 10 ist länger als der Lappen 11 ausgebildet und
geht vom Schenkel 8 des Halters 5 aus, sodaß er leichter als der
Lappen 11 seitlich, d.h. vom Schenkel 8 weg ausgebogen werden kann. Das
Ende 15 des Lappens 10 ist ebenso wie das Ende 14 zu diesem hin
schnabelförmig ausgebogen, wobei die beiden Enden 14,15 in einer
parallel zum Steg 9 verlaufenden Ebene gelegen sind.

Durch diese Ausbildung der Lappen 10,11 besteht die Möglichkeit,
das Gurttrennmesser 12, welches im wesentlichen die in Fig. 3
dargestellte Form, auf die tieferstehend noch näher eingegangen
wird, aufweist, in der Richtung des Pfeiles --A-- von der Seite
her in den Halter 5 einzuschieben, während die Herausnahme des
Messers aus dem Halter 5 entweder durch Hinausziehen entgegen der
Richtung des Pfeiles --A-- oder durch Verschwenken in der Richtung
einer der beiden Pfeile --B-- oder --C-- erfolgen kann. Dadurch
ist die Möglichkeit geboten, das Messer im Gefahrenmoment in jeder
Richtung dem Halter 5 zu entnehmen, da eine Entnahme in der Richtung des Pfeiles --A-- ebenfalls möglich ist.

Das Gurttrennmesser 12 besteht aus einem Griff 20 und einer Schneide bzw. scharfen Klinge 21, die aus beliebigem Material hergestellt
sein kann und vorzugsweise von einer Rasierklinge gebildet ist.
Der Griff 20 hat im wesentlichen die Form eines länglichen Plättchens mit annähernd parallelen Seiten 16,17 und einem schrägen
Schlitz 18, welcher von einer der _____ Seiten 16,17 im vorliegenden Fall von der Seite 16 ausgeht und dessen stirnseitige Begrenzungswand am inneren Ende 19, wie in Fig. 2 strichliert angedeutet, in die obere und in die untere Oberfläche des Griffes 20
ausläuft. Die Seitenwände 22,23 des Schlitzes 18 verlaufen
parallel zueinander, wobei lediglich das Ende der Wand 23 gegenüber der Wand 22 nach außen hin divergiert, sodaß sich der Schlitz
18 nur in diesem Bereich nach außen ausweitet und das Einführen
des durchzutrennenden Autogurtes erleichtert. Der Schlitz 18
verläuft unter einem steileren Winkel als die Schneide 21 zur
Seitenwand 17, wobei auch letztere mit der Seitenwand einen spitzen
Winkel $\alpha$ einschließt. Die Schneide bzw. Klinge 21 ist in der
Wand des Griffes 20 eingebettet, wobei lediglich ein schmaler,
höchstens der Breite des Schlitzes 18 entsprechender Streifen der
Schneide bzw. Klinge zugänglich ist, sodaß eine Verletzung des
Benützers des Gurttrennmessers 12 ausgeschlossen ist.

Zum leichteren Einführen des Messers 12 in den Halter 5 ist
dieses an seinem dem Schlitzende gegenüberliegenden Ende abgeschrägt, sodaß die Schrägfläche 24 in die Seitenwand 17 unter
einem spitzen Winkel ausläuft. Am anderen Ende des Griffes 20
befindet sich eine Öffnung 25 zum Einsetzen eines Fingers der
Hand der das Messer bedienenden Person. Die Öffnung ist endseitig
im wesentlichen kreisrund und annähernd kongruent zum Ende des
Griffes, während die Innenseite der Öffnung 25 durch eine schräge
Wand 26 begrenzt ist, welche im wesentlichen parallel zur Schrägwand 24 verläuft. Durch diese Ausgestaltung ist das Gurttrennmesser handlich und leicht zu bedienen, was in einem Gefahrenaugenblick von besonderer Bedeutung ist.

Selbstverständlich können im Rahmen der Erfindung verschiedene
konstruktive Änderungen und Weiterausbildungen vorgenommen werden.
So besteht die Möglichkeit, das Gurttrennmesser 12 gegen ungewolltes Herausfallen aus dem Halter 5 beim Befahren unebener Straßen
durch einen Schnappverschluß zu sichern, welcher in der Anordnung
einer Warze an der Innenseite vorzugsweise des Schenkels 11 und
einer die Warze aufnehmenden Kerbe an dem beim eingesetzten Messer

0116031

gegenüberliegenden Wandteil des Griffes 20 bestehen kann.

Patentansprüche

1. Einrichtung zum Durchschneiden von Autogurten mit einem Messer, dadurch gekennzeichnet, daß am unteren Rand der Fensteröffnung der Autotüre ein Halter (5) angeordnet ist, in dem das Messer (12) durch Einschieben so gehalten ist, daß es oberhalb der inneren Oberkante des unteren Randes der Fensteröffnung liegt, und daß das Messer (12) aus einer Griffplatte (20) und einer innerhalb eines vom Rand der Griffplatte (20) ausgehenden Schlitzes (18) griffgeschützt angeordneten Klinge (21) besteht.

2. Einrichtung nach Anspruch 1, dadurch gekennzeichnet, daß der Halter (5) aus einem U-förmigen Profil besteht, von welchem der eine Schenkel (6) zwischen der Fensterscheibe (2) und der unteren inneren Scheibendichtung (4) einsetzbar ist und der andere Schenkel in der Gebrauchslage an der Außenseite der Innenwand der Autotüre anliegt, wobei an dem zwischen den Schenkeln liegenden ebenen, in der Gebrauchslage gegen das Fahrzeuginnere hin abfallenden Steg nach oben abstehende Lappen (10,11) mit zueinander abgebogenen Enden zur Halterung des Messers vorgesehen sind.

3. Einrichtung nach Anspruch 2, dadurch gekennzeichnet, daß der zwischen Fensterscheibe (2) und Scheibendichtung (4) einsetzbare Schenkel (6) innenseitig mit einer Verzahnung (7) versehen ist, die vorzugsweise als Sägeverzahnung mit nach oben gerichteten Zähnen ausgebildet ist.

4. Einrichtung nach Anspruch 2, dadurch gekennzeichnet, daß die Schenkel des U-förmigen Profiles konvergieren.

5. Einrichtung nach Anspruch 4, dadurch gekennzeichnet, daß der der Fensterscheibe (2) abgekehrte Lappen (10) länger als der Lappen (11) ist und vom seitlichen Schenkel (8) des Halters (5) ausgeht, wobei die zueinander gebogenen Enden (14,15) der Lappen.

(10,11) in einer Ebene gelegen sind, die parallel zur Ebene des Steges (9) des Halters (5) verläuft.

6. Einrichtung nach Anspruch 1, dadurch gekennzeichnet, daß der Schlitz (18) am Rand der Griffplatte (20) mit einem erweiterten Ende ausläuft und im übrigen Teil mit zueinander parallel verlaufenden Wänden versehen ist.

7. Einrichtung nach Anspruch 6, dadurch gekennzeichnet, daß die Griffplatte (20) des Messers (12) an ihrem einen, dem Ausgang des Schlitzes (18) zugekehrten Ende mit einer Öffnung (25) zum Einsetzen des Fingers einer Hand der Bedienungsperson versehen ist, während das andere Ende sich verjüngend und bzw. oder nach einer Richtung hin, vorzugsweise in der Richtung des Schlitzes (18) abgeschrägt ausgebildet ist.

8. Einrichtung nach Anspruch 7, dadurch gekennzeichnet, daß die Öffnung (25) zum Einsetzen eines Fingers endseitig rund und im wesentlichen kongruent mit dem Ende der Griffplatte (20) ausgebildet ist, während sie innenseitig durch eine schräge Fläche (26) abgeschlossen ist, welche im wesentlichen parallel zur endseitigen Schrägfläche (24) des Griffes verläuft.

FIG.2

FIG.3

FIG.1